# EUROPEAN PATENT APPLICATION

(11) **EP 3 477 851 A1**
(43) Date of publication of application: **01.05.2019**
(21) Application number: 18742892.5
(22) Date of filing: 21.06.2018
(51) Int. Cl.: H02S 50/15, H02S 50/10

(54) **VARIABLE ANGLE OUTDOOR TEST DEVICE FOR PHOTOVOLTAIC ASSEMBLY**

(30) Priority: 30.08.2017 CN 201721098768 U
(71) Applicant: Miasolé Equipment Integration (Fujian) Co., Ltd., Quanzhou, Fujian 360025 (CN)
(72) Inventor: CHEN, Hehui, Fujian 360025 (CN); NI, Lizhou, Fujian 360025 (CN); XU, Yongyuan, Fujian 360025 (CN); LIAN, Zhongyan, Fujian 360025 (CN); YI, Shan, Fujian 360025 (CN); WANG, Yihuan, Fujian 360025 (CN); HUANG, Zhaoxiong, Fujian 360025 (CN)
(74) Representative: Winter, Brandl, Fürniss, Hübner, Röss, Kaiser, Polte - Partnerschaft mbB
(86) International application number: PCT/CN2018/092137
(87) International publication number: WO 2019/041980

(57) **Abstract**

The present disclosure discloses an outdoor test device for a variable-angle photovoltaic module comprising a base, a turntable and a storage table, wherein a caster assembly is fixedly arranged on the base, the turntable is rotatably connected with the base, a beam angle pole is fixedly arranged on the turntable, the beam angle pole is perpendicular to the turntable, and the storage table is fixedly connected with the base. The outdoor test device for a variable-angle photovoltaic module according to the present disclosure solves the problem that an existing test bracket cannot change its angle or direction, keeps a test turntable perpendicular to the sunlight constantly according to a projection state of the beam angle pole, facilitates an outdoor test operation, meets requirements of IEC on outdoor tests, and improves stability and accuracy of tests.

## Description

### CROSS-REFERENCE TO RELATED APPLICTIONS

The present application claims a priority of Chinese Patent Application No. 201721098768.2 filed on August 30, 2017, the disclosures of which are incorporated herein by reference in their entireties.

### TECHNICAL FIELD

The present disclosure relates to the field of solar cell test technologies, in particular to an outdoor test device for a variable-angle photovoltaic module.

### BACKGROUND

Since a light source of a photovoltaic module tester cannot completely simulate a solar spectrum, an outdoor test is often performed on a solar cell module, to study an actual performance of the module in the sun. Currently, all the outdoor tests of commercially available modules are directly conducted on a fixed bracket which cannot change its angle or direction arbitrarily. Therefore, the outdoor test of the module is inconvenient, and the module is not kept in direct sunlight constantly, which affects the accuracy of test results.

### SUMMARY

An object of the present disclosure is to provide an outdoor test device for a variable-angle photovoltaic module, so as to solve the problem that an existing test bracket cannot change its angle or direction, keep a test platform perpendicular to the sunlight constantly, facilitate an outdoor test operation, meet requirements of the International Electrotechnical Commission (IEC) on outdoor tests, and improve stability and accuracy of tests.

An outdoor test device for a variable-angle photovoltaic module includes a base and a turntable rotatably connected with the base. A beam angle pole is fixedly arranged on the turntable. The beam angle pole is perpendicular to a surface of the turntable.

Optionally, the device further comprises a storage table fixedly connected with the base.

Optionally, a caster assembly is fixedly arranged on the base.

Optionally, the caster assembly comprises a caster frame and a caster wheel rotatably connected with the caster frame. The caster frame is fixedly arranged on the base.

Optionally, the caster assembly further comprises a caster locking mechanism.

Optionally, a tray for mounting an irradiatometer is fixedly arranged on the turntable.

Optionally, a support rack is fixedly arranged on the base, and the turntable is rotatably connected with the support rack by a rotating shaft.

Optionally, the turntable comprises a left turntable and a right turntable, the support rack comprises a left support rack, a middle support rack and a right support rack, the left turntable is rotatably arranged between the left support rack and the middle support rack, and the right turntable is rotatably arranged between the right support rack and the middle support rack.

Optionally, the left support rack, the middle support rack and the right support rack each comprise a first support rod and a second support rod, one end of the first support rod is fixedly connected with one end of the second support rod, and the other end of the first support rod and the other end of the second support rod are both fixedly connected with the base.

Optionally, the right turntable is fixedly connected with the left turntable through a positioning pin at a side close to the middle support rack.

Optionally, the storage table includes a support plate and a storage plate which are perpendicular to each other, the support plate is fixedly connected with the base, and an end portion of the storage plate is fixedly connected with the first support rod of the left support rack and the first support rod of the middle support rack.

Optionally, the device further comprises a turntable locking mechanism, one end of which is fixedly arranged on the turntable, and the other end of which is fixedly arranged on the left support rack.

Optionally, the turntable locking mechanism is provided with a sliding chute, a limit bolt is arranged on a lateral edge of the left turntable, the limit bolt is slidably connected with the sliding chute, a positioning shaft is arranged on the left support rack, and the turntable locking mechanism rotates about the positioning shaft. During the adjustment of an angle of the turntable, the limit bolt slides along the sliding chute. When the angle adjustment is finished, the limit bolt is screwed down to fix the turntable.

Optionally, a support frame is fixedly arranged on the turntable, and a support turnup is arranged on the support frame.

Optionally, a plurality of connecting rods are arranged on the turntable.

The outdoor test device for a variable-angle photovoltaic module according to the present disclosure solves the problem that an existing test bracket cannot change an angle or direction, keeps a test turntable perpendicular to the sunlight constantly according to a projection state of the beam angle pole, facilitates an outdoor test operation, meets the requirements of IEC on outdoor tests, and improves the stability and accuracy of tests.

### BRIEF DESCRIPTION OF THE DRAWINGS

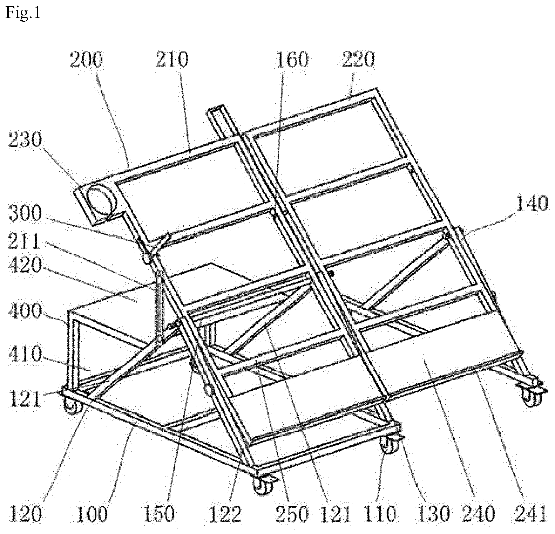

Figure 1 is a structural illustration of an outdoor test device for a variable-angle photovoltaic module according to an embodiment of the present disclosure.

**Reference numerals:**

| | | |
|---|---|---|
| 100-base | 110-caster assembly | 120-left support rack |
| 121-first support rod | 122-second support rod | 130-middle support rack |
| 140-right support rack | 150-rotating shaft | 160-positioning pin |
| 200-turntable | 210-left turntable | 211-turntable locking mechanism |
| 220-right turntable | 230-tray | 240-support frame |
| 241-support turnup | 250-connecting rod | 300-beam angle pole |
| 400-storage table | 410-support plate | 420-storage plate |

### DETAILED DESCRIPTION

The embodiments of the present disclosure will be described in detail below. Examples of the described embodiments are given in the accompanying drawings, wherein the identical or similar reference numerals constantly denote the identical or similar elements or elements having the identical or similar functions. The embodiments described with reference to the attached drawings are all exemplary, and are only intended to interpret the present disclosure rather than to limit the present disclosure.

As shown in Figure 1, an outdoor test device for a variable-angle photovoltaic module according to one embodiment of the present disclosure includes a base 100, a turntable 200 and a storage table 400; wherein a caster assembly 110 is fixedly arranged on the base 100; the turntable 200 is rotatably connected with the base 100, a beam angle pole 300 is fixedly arranged on the turntable 200, the beam angle pole 300 is perpendicular to a surface of the turntable 200; the storage table 400 is fixedly connected with the base 100.

In the case that an outdoor test is performed on a solar cell module by the outdoor test device for a variable-angle photovoltaic module according to one embodiment of the present disclosure, the solar cell module is placed on the turntable 200, the base 100 is moved by the caster assembly 110, such that the turntable 200 is placed in the sun, and its angle with solar rays is adjusted by rotating the turntable 200 with its surface perpendicular to the solar rays usually, wherein since the beam angle pole 300 is perpendicular to the surface of the turntable 200, it would generate a projection in the sun, so the operator can judge whether the turntable 200 is adjusted to be perpendicular to the solar rays according to the projection of this right-angle pole, thereby facilitating outdoor test operability, meeting requirements of IEC on outdoor tests more easily, and improving stability and accuracy of tests.

Further, the outdoor test device for a variable-angle photovoltaic module may further include a storage table 400 fixedly connected with the base 100. In the outdoor test, an IV tester is usually used to test IV data of the solar cell module. However, in the prior art, usually, the IV tester can move by using a specific vehicle, thereby increasing a site area during the test. Before use, it needs to adjust a positional relationship with the solar cell module, with complicated operations, wasted operation space and reduced test efficiency due to separate movement. In the present embodiment, by arranging the storage table 400 on the base 100, the IV tester may be placed on the storage table 400. During the test, there is no need to adjust the IV tester repeatedly, and the test can be performed as long as the solar cell module is placed on the adjusted turntable 200, with convenient operations, improved test efficiency and saved floor space.

It is understood that the caster assembly 110 may include a caster frame and a caster wheel rotatably connected with the caster frame. The caster frame is fixedly arranged on the base 100. In addition, in order to ensure that the adjusted base 100 does not move any more, the caster assembly 110 may further include a caster locking mechanism to lock the caster wheel and avoid its rolling.

In test, an irradiatometer is usually used to test sunlight intensity. However, in the prior art, an irradiatometer is usually arranged on ground close to the solar cell module, which tends to be stepped on and is not convenient for management; therefore, in the present embodiment, a tray 230 for mounting an irradiatometer is fixedly arranged on the turntable 200, thus an irradiatometer may be fixedly mounted on the tray 230 for convenient management. Meanwhile, an irradiatometer may receive the same sunlight exposure as the solar cell module, which ensures the accuracy of collecting data.

Further, a support rack is fixedly arranged on the base 100, and the turntable 200 is rotatably connected with the support rack through a rotating shaft 150.

Specifically, the turntable 200 includes a left turntable 210 and a right turntable 220, the support rack includes a left support rack 120, a middle support rack 130 and a right support rack 140. The left turntable 210 is rotatably arranged between the left support rack 120 and the middle support rack 130, and the right turntable 220 is rotatably arranged between the right support rack 140 and the middle support rack 130. The left turntable 210 may have the same structure as the right turntable 220, and the left turntable 210 and the right turntable 220 enable testing a plurality of groups of solar cell modules simultaneously, so as to improve test efficiency. It should be noted that the rotating shaft 150 may pass through the left support rack 120, the left turntable 210 and the middle support rack 130 successively, and then penetrate into one side of the right turntable 220 close to the middle support rack 130. At the same time, the right turntable 220 is fixedly connected with the left turntable 210 through a positioning pin 160 at another position on the side of the right turntable 220 close to the middle support rack 130. Therefore, the left turntable 210 and the right turntable 210 are fixed at two positions, and a synchronous turnover of the left turntable 210 and the right turntable 220 is ensured. Meanwhile, one side of the right turntable 220 close to the right support rack 140 may be rotatably connected with the right support rack 140 through a rotating pin.

Specifically, the left support rack 120, the middle support rack 130 and the right support rack 140 may each include a first support rod 121 and a second support rod 122, wherein one end of the first support rod 121 is fixedly connected with one end of the second support rod 122, while the other end of the first support rod 121 and the other end of the second support rod 122 are both fixedly connected with the base 100. Therefore, the first support rod 121, the second support rod 122 and the base 100 form a triangular structure, which improves support strength to the turntable 200, and ensures working reliability of the turntable 200.

To ensure strength of the whole turntable 200, a plurality of connecting rods 250 may be arranged on the turntable 200.

It should be noted that the storage table 400 includes a support plate 410 and a storage plate 420, which are perpendicular to each other, so as to form an "L"-shaped structure. The support plate 410 is vertically arranged and is fixedly connected with the base 100. An end portion of the storage plate 420 is fixedly connected with the first support rod 121 of the left support rack 120 and the first support rod 121 of the middle support rack 130, thereby increasing support strength to the storage table 400 by the two oblique support rods. Meanwhile, the storage plate 420 may also share a twisting force of the two support rods in the same direction or opposite directions, which ensures the support strength of the support rack.

To avoid a free rotation of the turntable 200 after an angle adjustment, the outdoor test device for a variable-angle photovoltaic module may further include a turntable locking mechanism, one end of which may be fixedly arranged on the turntable 200, while the other end of which is fixedly arranged on the left support rack 120. Specifically, the turntable locking mechanism 211 is provided with a sliding chute, a limit bolt is arranged on a lateral edge of the left turntable 210, the limit bolt is slidably connected with the sliding chute, a positioning shaft is arranged on the left support rack 120, and the turntable locking mechanism 211 rotates about the positioning shaft. During the adjustment of an angle of the turntable 200, the limit bolt may slide along the sliding chute. When the angle adjustment is finished, the limit bolt is screwed down to fix the turntable 200, thereby ensuring accuracy of solar irradiating angle for a solar cell module.

It can be understood that in order to prevent a solar cell module from falling off from the turntable 200, the support frame 240 is fixedly arranged on the turntable 240, and a support turnup 241 is arranged on the support frame 240. After a solar cell module is positioned onto the turntable 200, its bottom may abut against the support turnup 241, thereby ensuring that a solar cell module will not fall off from the turntable 200 when the turntable 200 may turn over at any angle.

The outdoor test device for a variable-angle photovoltaic module according to the embodiment of the present disclosure solves the problem that an existing test bracket cannot change its angle or direction, keeps a test turntable perpendicular to the sunlight constantly according to a projection state of the beam angle pole, facilitates an outdoor test operation, meets requirements of IEC on outdoor tests, and improves stability and accuracy of tests.

The constructions, features and effects of the present disclosure are detailed in the embodiments in conjunction with the drawings. However, the foregoing merely describes the preferable embodiments of the present disclosure. The scope of the present disclosure is not limited to those shown by the drawings. Any change made based on the principle of the present disclosure or modified equivalent embodiments without departing from the spirit of the specification and drawings shall fall within the protection scope of the present disclosure.

## Claims

1. An outdoor test device for a variable-angle photovoltaic module, comprising:
a base; and
a turntable, rotatably connected with the base, on which a beam angle pole is fixedly arranged, the beam angle pole being perpendicular to a surface of the turntable.

2. The outdoor test device according to claim 1, further comprising a storage table fixedly connected with the base.

3. The outdoor test device according to claim 1, wherein a caster assembly is fixedly arranged on the base.

4. The outdoor test device according to claim 3, wherein the caster assembly comprises a caster frame and a caster wheel rotatably connected with the caster frame, and the caster frame is fixedly arranged on the base.

5. The outdoor test device according to claim 4, wherein the caster assembly further comprises a caster locking mechanism.

6. The outdoor test device according to claim 1, wherein a tray for mounting an irradiatometer is fixedly arranged on the turntable.

7. The outdoor test device according to claim 1, wherein a support rack is fixedly arranged on the base, and the turntable is rotatably connected with the support rack by a rotating shaft.

8. The outdoor test device according to claim 7, wherein the turntable comprises a left turntable and a right turntable, the support rack comprises a left support rack, a middle support rack and a right support rack, the left turntable is rotatably arranged between the left support rack and the middle support rack, and the right turntable is rotatably arranged between the right support rack and the middle support rack.

9. The outdoor test device according to claim 8, wherein the left support rack, the middle support rack and the right support rack each comprise a first support rod and a second support rod, one end of the first support rod is fixedly connected with one end of the second support rod, and the other end of the first support rod and the other end of the second support rod are both fixedly connected with the base.

10. The outdoor test device according to claim 9, wherein the right turntable is fixedly connected with the left turntable through a positioning pin at a side close to the middle support rack.

11. The outdoor test device according to claim 9, wherein the storage table comprises a support plate and a storage plate which are perpendicular to each other, the support plate is fixedly connected with the base, and an end portion of the storage plate is fixedly connected with the first support rod of the left support rack and the first support rod of the middle support rack.

12. The outdoor test device according to claim 11, further comprising a turntable locking mechanism, one end of which is fixedly arranged on the turntable, and the other end of which is fixedly arranged on the left support rack.

13. The outdoor test device according to claim 12, wherein the turntable locking mechanism is provided with a sliding chute, a limit bolt is arranged on a lateral edge of the left turntable, the limit bolt is slidably connected with the sliding chute, a positioning shaft is arranged on the left support rack, and the turntable locking mechanism rotates about the positioning shaft; wherein during the adjustment of an angle of the turntable, the limit bolt slides along the sliding chute, and when the angle adjustment is finished, the limit bolt is screwed down to fix the turntable.

14. The outdoor test device according to claim 12, wherein a support frame is fixedly arranged on the turntable, and a support turnup is arranged on the support frame.

15. The outdoor test device according to claim 1, wherein a plurality of connecting rods are arranged on the turntable.
